# EUROPÄISCHE PATENTSCHRIFT

(11) **EP 3 995 381 B1**
(45) Veröffentlichungstag und Bekanntmachung des Hinweises auf die Patenterteilung: **23.08.2023**
(21) Anmeldenummer: 20206753.4
(22) Anmeldetag: 10.11.2020
(51) Int. Cl.: B61D 3/20

(54) **GELENKWAGENANORDNUNG FÜR EINEN EISENBAHNGÜTERZUG**
ARTICULATED WAGON ARRANGEMENT FOR RAILWAY GOODS TRAIN
AMÉNAGEMENT DE WAGON ARTICULÉ POUR UN TRAIN MARCHANDISES FERROVIAIRE

(43) Veröffentlichungstag der Anmeldung: 11.05.2022
(73) Patentinhaber: SWS PS Power Solutions GmbH, 8010 Graz (AT)
(72) Erfinder: Wegmüller, Beat, 4950 Huttwil (CH)
(74) Vertreter: Bird & Bird LLP

(56) Entgegenhaltungen:
- EP-A1- 2 647 540
- WO-A2-2018/190718
- CN-U- 201 901 145
- CN-U- 207 225 347
- RU-U1- 176 833

## Beschreibung

Die vorliegende Erfindung betrifft eine Gelenkwagenanordnung für einen Eisenbahngüterzug, insbesondere eine Containertragwagenanordnung. Weitere Aspekte der Erfindung betreffen einen Gelenkwagen sowie eine Energieversorgungseinheit für eine solche Gelenkwagenanordnung.

Die Gelenkwagenanordnung umfasst einen Gelenkwagen zum Transport von Containern einschließlich Sattelanhängern, insbesondere einen sogenannten Containertragwagen (CTW), wobei die Container beispielsweise sogenannte Reefer-Container, Tank-Container, Kühl-Wechselbrücken oder Kühl-Sattelanhänger sein können. Der Gelenkwagen umfasst einen ersten Wagenteil und einen zweiten Wagenteil, wobei der erste und der zweite Wagenteil über eine Gelenkkupplung gelenkig mindestens um eine vertikale Gelenkachse miteinander gekoppelt sind und im Bereich der Gelenkkupplung an ihren zueinander weisenden Enden vorzugsweise auf einem gemeinsamen Drehgestell, insbesondere einem Jakobs-Drehgestell, abgestützt sind. Weitere Drehgestelle sind vorzugsweise an den voneinander wegweisenden Enden der beiden Wagenteile vorgesehen. Der erste Wagenteil weist an seiner Oberseite einen ersten Containerstellplatz für einen oder mehrere Container auf und der zweite Wagenteil weist an seiner Oberseite einen zweiten Containerstellplatz für einen oder mehrere Container auf.

Die Gelenkwagenanordnung umfasst ferner eine Energieversorgungseinheit zur vorzugsweise autonomen Energieversorgung, insbesondere mit elektrischer Energie, von auf dem Gelenkwagen geladenen Containern. Autonome Energieversorgung meint in diesem Zusammenhang eine Energieversorgung, die ohne oder zumindest ohne kontinuierliche Energieversorgung von der Lokomotive, einem anderen Gelenkwagen oder der Oberleitung auskommt, vorzugsweise keinen entsprechenden Anschluss zu der Lokomotive, den anderen Gelenkwagen oder der Oberleitung aufweist.

Ähnliche Gelenkwagenanordnungen sind aus dem Stand der Technik bekannt, wie beispielsweise aus der WO 2018/190718 A2. Solche Gelenkwagenanordnungen sind unter anderem zur Aufnahme von Containern vorgesehen, die für den Transport von Temperaturkontrollierten Gütern bestimmt sind, wie beispielsweise Reefer-Container, Tank-Container, Kühl-Wechselbrücken oder Kühl-Sattelanhänger. Derartige Container bringen hohe Anforderungen an die Energieversorgung mit sich, da sie einerseits einen hohen Energiebedarf zum Betreiben der Kühl- bzw. Heizanlage haben und andererseits eine geschlossene Kühl- bzw. Heizkette gewährleisten müssen, d.h. nicht nur während der Fahrt, sondern auch im Stillstand sowie im Rangier- und Umschlagbetrieb eine ununterbrochene Energieversorgung benötigen. Daher ist eine Energieversorgung über benachbarte Wagen, Lokomotive oder Oberleitung nicht ideal, da hierbei eine ununterbrochene Energieversorgung dabei nicht oder zumindest nicht ohne Umstände möglich ist.

Ferner sind Gelenkwagenanordnungen bekannt, die Energieversorgungseinheiten mit Batterien aufweisen. Aufgrund des hohen Energiebedarfs der Container sind solche batteriebetriebenen Energieversorgungseinheiten jedoch relativ groß, so dass die Unterbringung der Energieversorgungseinheit eine Herausforderung darstellt. Gemäß einer bekannten Lösung ist die Energieversorgungseinheit unterhalb des Containerstellplatzes untergebracht. Dies hat jedoch den Nachteil, dass der Containerboden etwas erhöht sitzen muss und damit aufgrund der festen Höhenbeschränkung eines Eisenbahngüterzuges insgesamt weniger Platz für die Container vorhanden ist bzw. bestimmte Container nicht transportiert werden können.

Daher ist es die Aufgabe der vorliegenden Erfindung, eine Gelenkwagenanordnung bereitzustellen, mit der eine ununterbrochene Energieversorgung von geladenen Containern auch im Stillstand und Rangierbetrieb einfach möglich ist und die eine maximale Ladekapazität für zu ladende Container aufweist.

Diese Aufgabe wird dadurch gelöst, dass die Energieversorgungseinheit im Bereich der Gelenkkupplung des ersten und des zweiten Wagenteils, insbesondere oberhalb des gemeinsamen Drehgestells, vorzugsweise mittig zwischen dem ersten und dem zweiten Containerstellplatz bzw. den darauf platzierten Containern angeordnet und befestigt ist.

Auf diese Weise wird der ohnehin freie spaltförmige Platz zwischen den Containern benachbarter Wagenteile eines Gelenkwagens für die Unterbringung der Energieversorgungseinheit genutzt. Dieser Platz ist ausreichend groß, um eine Energieversorgungseinheit unterzubringen, welche die Kühl- oder Heizanlage eines Containers für Temperatur-kontrollierte Güter versorgen kann. Gleichzeitig wird auf diese Weise kein Platz unterhalb der Containerstellplätze oder an anderen die Containerstellplätze einschränkenden Orten der Wagenteile von der Energieversorgungseinheit eingenommen, so dass der der für die Container verfügbare Raum durch die Energieversorgungseinheit nicht eingeschränkt wird. Außerdem kann die Energieversorgungseinheit im kombinierten Verkehr als Ladeeinheit deklariert werden, so dass die Energieversorgungseinheit nicht als Bestandteil des Gelenkwagens angesehen wird. Dadurch erübrigt sich eine Anpassung der Zulassung des Gelenkwagens und damit eine Änderung bzw. Erweiterung der bestehenden Wagennummer, wenn die Energieversorgungseinheit mit einem bereits zugelassenen Gelenkwagen kombiniert wird.

In einer bevorzugten Ausführungsform umfasst die Energieversorgungseinheit eine Tragstruktur und mehrere an bzw. in der Tragstruktur befestigte Energieversorgungsbauteile. Die Tragstruktur hat vorzugsweise eine geschlossene Gehäuseform, beispielsweise eine Stahlrahmenkonstruktion mit Außenverschalung aus Stahlblech. Mittels einer solchen Tragstruktur können die Energieversorgungsbauteile geschützt und verlässlich an dem Gelenkwagen befestigt werden.

Dabei ist es besonders bevorzugt, wenn die Tragstruktur über eine Adaptervorrichtung an dem Gelenkwagen, vorzugsweise am ersten oder am zweiten Wagenteil, befestigt ist. Eine Adaptervorrichtung erlaubt eine sichere Befestigung der Energieversorgungseinheit an dem Gelenkwagen, ohne dass dieser wesentlich verändert werden muss.

Dabei ist es ferner bevorzugt, wenn die Adaptervorrichtung mindestens eine Adapterplatte, vorzugsweise zwei in Querrichtung des Gelenkwagens beabstandete Adapterplatten, umfasst, die an dem zum zweiten Wagenteil weisenden Ende des ersten Wagenteils an dessen Oberseite befestigt, insbesondere verschraubt, ist bzw. sind und zum zweiten Wagenteil hin ragt bzw. ragen. Solche Adapterplatten bieten eine sichere Basis und Befestigung der Energieversorgungseinheit im Bereich der Gelenkkupplung im Wesentlichen mittig zwischen dem ersten und zweiten Wagenteil bzw. den entsprechenden geladenen Containern.

Weiter ist es bevorzugt, wenn die Adaptervorrichtung, insbesondere die Adapterplatte bzw. Adapterplatten, vorzugsweise an ihrer Oberseite, Befestigungszapfen aufweist und wenn die Tragstruktur, vorzugsweise an ihrer Unterseite, entsprechende Zapfenaufnahmen zum Eingriff und vorzugsweise auch zum Verrasten mit den Befestigungszapfen aufweist. Vorzugsweise sind zwei in Querrichtung beabstandete Adapterplatten vorgesehen, die an ihrer Oberseite jeweils zwei Befestigungszapfen aufweisen und mit vier entsprechenden an der Tragstruktur, vorzugsweise am Stahlrahmen der Tragstruktur, vorgesehenen Zapfenaufnahmen eingreifen und verrasten können. Mit solchen Befestigungszapfen und entsprechenden Zapfenaufnahmen kann die Energieversorgungseinheit sicher, einfach und schnell an der Adaptervorrichtung und damit an dem Gelenkwagen befestigt werden.

Dabei ist es außerdem bevorzugt, wenn die Befestigungszapfen Containerzapfen nach Norm UIC 571-4 sind. Solche Befestigungszapfen sind standartmäßig an den Containerstellplätzen zur Befestigung der Container vorgesehen. Vorzugsweise sind auch die Zapfenaufnahmen nach Norm UIC 571-4 ausgebildet. Solche Zapfenaufnahmen sind standartmäßig am Boden der Container zum Eingriff mit den Befestigungszapfen vorgesehen. Die Verwendung derartiger genormter Standartverbindungselemente hat den Vorteil, dass sie nicht eigens zertifiziert werden müssen.

In einer bevorzugten Ausführungsform umfassen die Energieversorgungsbauteile mindestens einen Energiespeicher. Mit einem solchen Energiespeicher können die Container für eine bestimmte Zeit völlig unabhängig von äußeren Energiequellen mit Energie versorgt werden. Außerdem kann ein solcher Energiespeicher in aufladbarer Form als Zwischenspeicher bei einem Anschluss an eine äußere Energieversorgung genutzt werden.

Dabei ist es besonders bevorzugt, wenn der Energiespeicher mindestens eine aufladbare Batterie umfasst, vorzugsweise zwischen drei und sieben Hochleistungs-Akku-Strings aus LiFePO₄ mit je 9kWh und modularer Speicherkapazität von 27kWh bis 63kWh. Eine derartige aufladbare Batterie kann elektrische Energie für die Container bereitstellen, wenn keine externe Stromzufuhr verfügbar ist, und kann geladen werden, wenn elektrische Energie verfügbar ist, sowohl durch eigene Stromerzeugung oder über externe Stromquellen.

Dabei ist es ferner besonders bevorzugt, wenn die Energieversorgungsbauteile mindestens einen elektrischen Generator, vorzugsweise einen AC Asynchrongenerator mit 22kW, zum Laden der Batterie umfassen. Der Generator kann beispielsweise durch kinetische Energie aus der Bewegung des Gelenkwagens angetrieben werden. Auf diese Weise kann die Batterie mit einem eigens in der Energieversorgungseinheit vorgesehenen Generator geladen werden, beispielsweise während der Fahrt des Gelenkwagens.

Vorzugsweise wird dabei der Generator mit Hydraulikdruck betrieben. Hydraulikdruck eignet sich besonders, um einen Generator zu betreiben und kann unkompliziert beispielsweise aus kinetischer Energie erzeugt werden.

Weiter ist es bevorzugt, wenn die Gelenkwagenanordnung zur Bereitstellung des Hydraulikdrucks eine Hydraulikpumpe, insbesondere eine Axialkolben-Konstantpumpe, aufweist, die insbesondere an einem Radsatz, vorzugsweise an einem Radsatz des gemeinsamen Drehgestells, montiert und von diesem angetrieben ist. Vorzugsweise ist die Hydraulikpumpe an der Radnabe befestigt und nimmt dort die kinetische Energie aus der Drehung des Rads ab. Zur Verbindung der Hydraulikpumpe mit dem Generator sind vorzugsweise Hydraulikschläuche, insbesondere drei Hydraulikschläuche, vorgesehen, welche den Hydraulikdruck von der Hydraulikpumpe zu dem Generator transportieren. Mit einer solchen Hydraulikpumpe am Radsatz kann der zur Stromerzeugung vom Generator geforderte Hydraulikdruck unkompliziert und zuverlässig bereitgestellt werden, ohne dass umfangreiche Anpassungen des Gelenkwagens notwendig sind.

In einer bevorzugten Ausführungsform umfassen die Energieversorgungsbauteile mindestens ein Netz-Ladegerät, vorzugsweise ein HF-Netz-Ladegerät mit 10kW, zum Laden der Batterie mit externem Netzstrom. Vorzugsweise umfassen die Energieversorgungsbauteile ferner mindestens einen zugehörigen Ladeanschluss, vorzugsweise zwei CEE-Ladedosen, 5-polig, zur Verbindung des Netz-Ladegeräts mit einem externen Netzanschluss. Mit einem solchen Netz-Ladegerät und zusätzlichen Ladeanschluss kann die Batterie über eine externe Stromversorgung geladen werden. Das Laden der Batterie über das Netz-Ladegerät kann dabei zusätzlich zu dem Laden mittels Generators oder unabhängig von diesem erfolgen.

In einer weiteren bevorzugten Ausführungsform umfassen die Energieversorgungsbauteile mindestens einen Lastanschluss, vorzugsweise vier CEE-Lastdosen, 4-polig und/oder 5-polig, vorzugsweise je zwei pro Seite der Energieversorgungseinheit, zur Verbindung mit einem entsprechenden Anschluss an einem Container zur Versorgung eines Verbrauchers, wie beispielsweise einer Kühl- bzw. Heizanlage. Auf diese Weise kann jeder Container einfach und schnell mit der Energieversorgungseinheit verbunden werden, auch für den Fall, dass je Wagenteil zwei Container geladen werden.

Ein weiterer Aspekt der vorliegenden Erfindung betrifft einen Gelenkwagen für eine Gelenkwagenanordnung nach einer der zuvor beschriebenen Ausführungsformen. Der Gelenkwagen umfasst einen ersten Wagenteil und einen zweiten Wagenteil. Der erste und der zweite Wagenteil sind über eine Gelenkkupplung gelenkig mindestens um eine vertikale Gelenkachse miteinander gekoppelt und im Bereich der Gelenkkupplung an ihren zueinander weisenden Enden vorzugsweise auf einem gemeinsamen Drehgestell abgestützt. Der erste Wagenteil weist an seiner Oberseite einen ersten Containerstellplatz für einen oder mehrere Container auf. Gleichsam weist der zweite Wagenteil an seiner Oberseite einen zweiten Containerstellplatz für einen oder mehrere Container auf. Ferner weist der Gelenkwagen eine Adaptervorrichtung zur Befestigung einer Energieversorgungseinheit zur autonomen Energieversorgung von auf dem Gelenkwagen geladenen Containern auf. Die Adaptervorrichtung ist im Bereich der Gelenkkupplung, vorzugsweise oberhalb des gemeinsamen Drehgestells, vorzugsweise mittig zwischen dem ersten und dem zweiten Containerstellplatz bzw. den darauf platzierten Containern angeordnet und vorzugsweise an dem ersten Wagenteil befestigt. Die weiter oben im Zusammenhang mit der Gelenkwagenanordnung beschriebenen Merkmale und Wirkungen gelten vis-a-vis auch für den Gelenkwagen.

Ein weiterer Aspekt betrifft eine Energieversorgungseinheit für eine Gelenkwagenanordnung nach einer der zuvor beschriebenen Ausführungsformen umfassend eine vorzugsweise geschlossene Tragstruktur und mehrere an bzw. in der Tragstruktur befestigte Energieversorgungsbauteile, wobei die Tragstruktur eingerichtet ist, um über eine Adaptervorrichtung an einem Gelenkwagen der Gelenkwagenanordnung befestigt zu werden. Die weiter oben im Zusammenhang mit der Gelenkwagenanordnung beschriebenen Merkmale und Wirkungen gelten vis-a-vis auch für den die Energieversorgungseinheit.

Bevorzugte Ausführungsbeispiele der vorliegenden Erfindung werden im Folgenden anhand einer Zeichnung näher erläutert. Die Zeichnung zeigt in
- Fig. 1: eine Seitenansicht einer Gelenkwagenanordnung nach einer Ausführungsform der Erfindung,
- Fig. 2: eine Detailansicht von oben auf den Bereich der Gelenkkupplung der Gelenkwagenanordnung aus Fig. 1 mit der dort angeordneten Energieversorgungseinheit,
- Fig. 3: eine Seitenansicht der Gelenkwagenanordnung aus Fig. 1 beladen mit zwei Kühl-Sattelanhängern,
- Fig. 4: eine Seitenansicht der Gelenkwagenanordnung aus Fig. 1 beladen mit zwei Reefer-Containern,
- Fig. 5: eine Seitenansicht der Gelenkwagenanordnung aus Fig. 1 beladen mit vier Kühl-Wechselbrücken,
- Fig. 6: eine Detailansicht von oben auf den Bereich der Gelenkkupplung der Gelenkwagenanordnung aus Fig. 5 ohne Energieversorgungseinheit,
- Fig. 7: eine perspektivische Ansicht einer isolierten Adapterplatte zur Befestigung einer Energieversorgungseinheit an einem Gelenkwagen gemäß der Erfindung,
- Fig. 8: eine Detailansicht von oben auf den Bereich der Gelenkkupplung der Gelenkwagenanordnung aus Fig. 1 mit dort befestigten Adapterplatten aber ohne Energieversorgungseinheit,
- Fig. 9: eine isolierte Ansicht von oben auf das Ende des ersten Wagenteils der Gelenkwagenanordnung aus Fig. 1 und der dort befestigten Energieversorgungseinheit,
- Fig. 10: eine isolierte Ansicht von vorne auf das Ende des ersten Wagenteils der Gelenkwagenanordnung aus Fig. 1 und der dort befestigten Energieversorgungseinheit,
- Fig. 11: eine Detailansicht der Befestigung der Energieversorgungseinheit am Ende des ersten Wagenteils aus Fig. 10 mit Blick auf einen Befestigungszapfen einer Adapterplatte in Eingriff mit einer Zapfenaufnahme eines Containers,
- Fig. 12: eine Seitenansicht einer erfindungsgemäßen Gelenkwagenanordnung mit Blick auf eine am Radsatz montierte Hydraulikpumpe
- Fig. 13: eine perspektivische isolierte Ansicht der Hydraulikpumpe aus Fig. 12 und
- Fig. 14: eine Ansicht von vorne auf eine erfindungsgemäße Energieversorgungseinheit mit aufgeschnittener Tragstruktur und Blick auf die Energieversorgungsbauteile im Inneren der Tragstruktur.

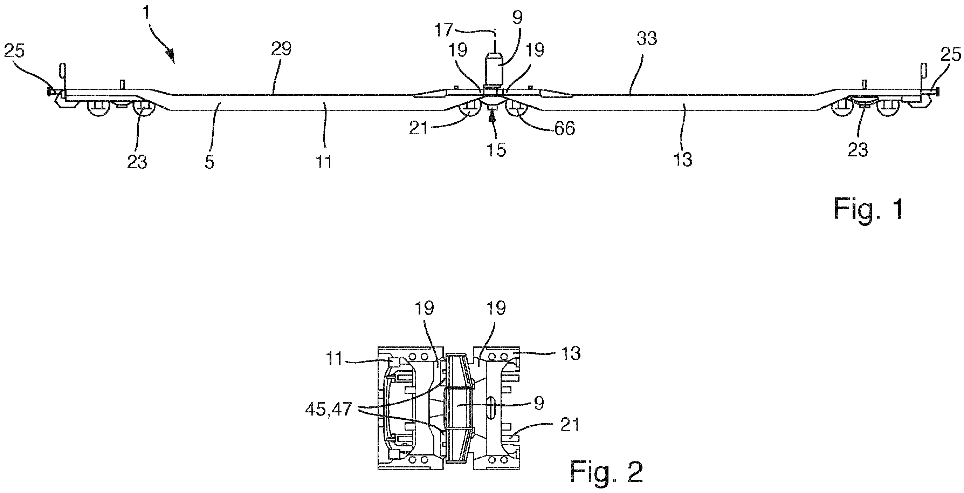

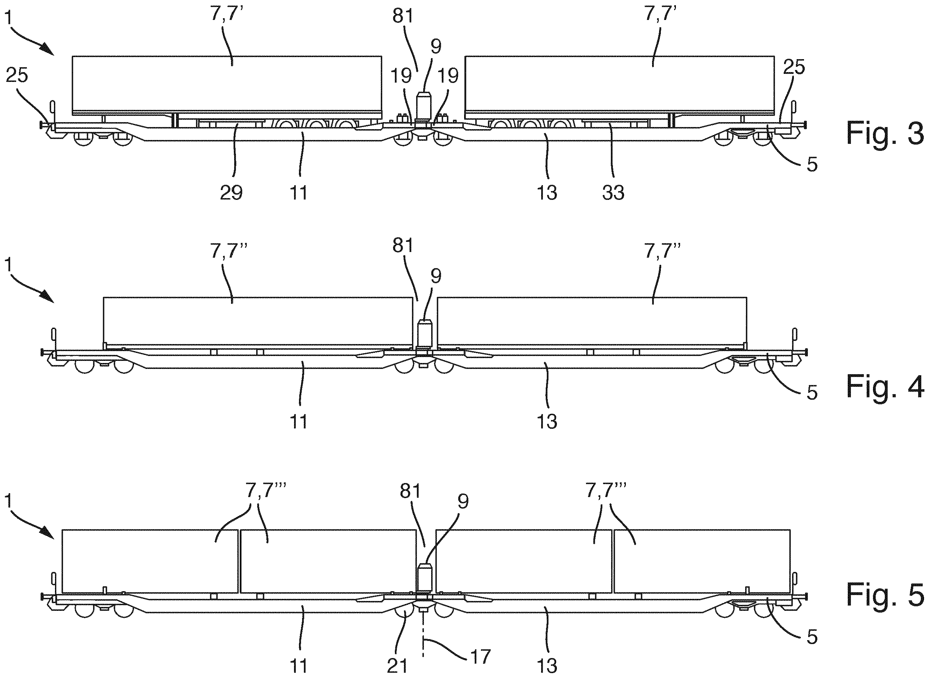

In Fig. 1 und 2 ist eine erfindungsgemäße Gelenkwagenanordnung 1 für einen Eisenbahngüterzug dargestellt. Die Gelenkwagenanordnung 1 umfasst einen Gelenkwagen 5 zum Transport von Containern 7, auch Containertragwagen (CTW) genannt, sowie eine Energieversorgungseinheit 9 zur elektrischen Energieversorgung von auf dem Gelenkwagen 5 geladenen Containern 7. Solche Container 7 können beispielsweise Kühl-Sattelanhänger 7' wie in Fig. 3 gezeigt, sogenannte Reefer-Container 7" wie in Fig. 4 gezeigt, Kühl-Wechselbrücken 7‴ wie in Fig. 5 gezeigt, oder Tank-Container sein.

Der Gelenkwagen 5 umfasst einen ersten Wagenteil 11 und einen zweiten Wagenteil 13, wobei der erste und der zweite Wagenteil 11, 13 über eine Gelenkkupplung 15 gelenkig um eine vertikale Gelenkachse 17 miteinander gekoppelt sind und im Bereich der Gelenkkupplung 15 an ihren zueinander weisenden Enden 19 auf einem gemeinsamen Drehgestell 21 abgestützt sind. Weitere Drehgestelle 23 sind an den voneinander wegweisenden Enden 25 der beiden Wagenteile 11, 13 vorgesehen. Der erste Wagenteil 11 weist an seiner Oberseite einen ersten Containerstellplatz 29 für einen oder mehrere Container 7 auf und der zweite Wagenteil 13 weist an seiner Oberseite einen zweiten Containerstellplatz 33 für einen oder mehrere Container 7 auf.

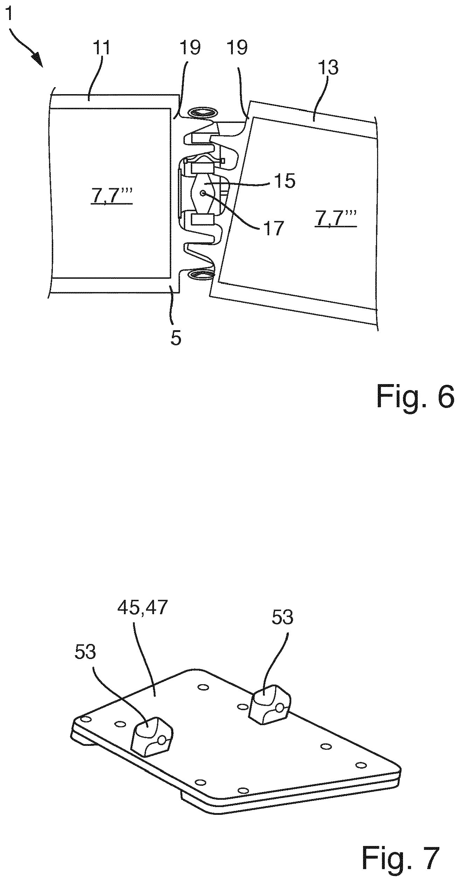

Die Energieversorgungseinheit 9 ist eingerichtet zur autonomen elektrischen Energieversorgung der Container 7 ohne Rückgriff auf eine Energieversorgung der Lokomotive, eines anderen Gelenkwagens oder der Oberleitung. Die Energieversorgungseinheit 9 ist im Bereich der Gelenkkupplung 15 des ersten und des zweiten Wagenteils 11, 13 oberhalb des gemeinsamen Drehgestells 21 mittig zwischen dem ersten und dem zweiten Containerstellplatz 29, 33 bzw. den darauf platzierten Containern 7 angeordnet und befestigt, wie in den Fig. 1 bis 5 erkennbar ist. Fig. 6 zeigt einen unversperrten Blick auf die Gelenkkupplung 15 von oben.

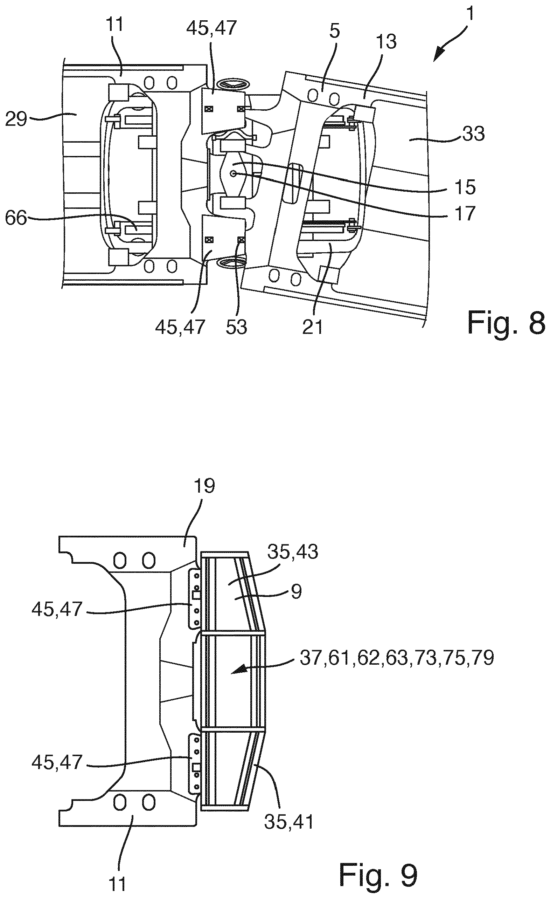

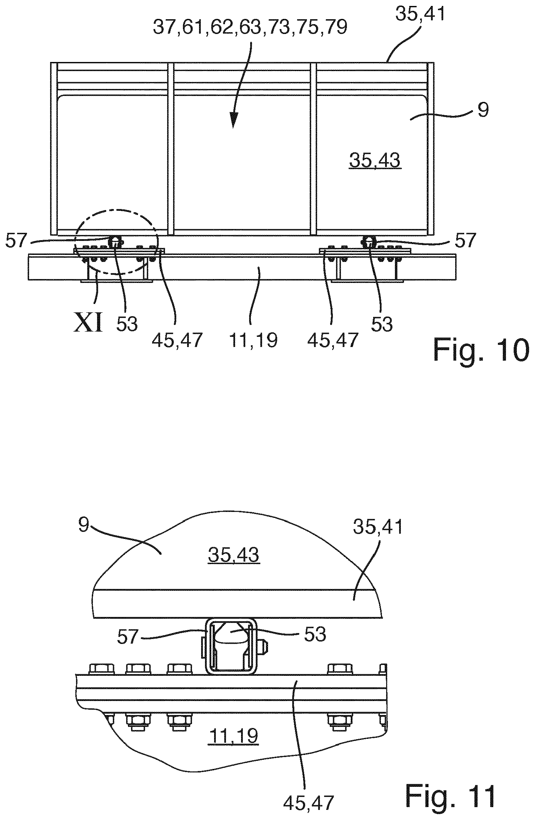

Wie beispielsweise in Fig. 9 und 10 erkennbar ist, umfasst die Energieversorgungseinheit 9 eine Tragstruktur 35 und mehrere an bzw. in der Tragstruktur 35 befestigte Energieversorgungsbauteile 37. Die Tragstruktur 35 hat eine geschlossene Gehäuseform gebildet durch eine geschweißte Stahlrahmenkonstruktion 41 mit Außenverschalung 43 aus Stahlblech.

Die Tragstruktur 35 ist über eine Adaptervorrichtung 45 an dem Gelenkwagen 5 befestigt, wie dies in den Fig. 7 bis 11 gezeigt ist. Dabei ist in Fig. 7 und 8 dargestellt, dass die Adaptervorrichtung 45 zwei in Querrichtung des Gelenkwagens 5 beabstandete Adapterplatten 47 umfasst, die an dem zum zweiten Wagenteil 13 weisenden Ende 19 des ersten Wagenteils 11 an dessen Oberseite befestigt sind und zum zweiten Wagenteil 13 hin ragen. Die Adapterplatten 47 weisen an ihrer Oberseite jeweils zwei Befestigungszapfen 53 auf und die Tragstruktur 35 weist an der Unterseite der Stahlrahmenkonstruktion 41 vier entsprechende Zapfenaufnahmen 57 zum Eingriff und zum Verrasten mit den Befestigungszapfen 53 auf, wie dies in Fig. 10 und 11 erkennbar ist. Die Befestigungszapfen 53 sind als Containerzapfen nach Norm UIC 571-4 gebildet, wie sie standartmäßig an den Containerstellplätzen 29, 33 zur Befestigung der Container 7 vorgesehen sind. Auch die Zapfenaufnahmen 57 sind nach Norm UIC 571-4 ausgebildet, so dass zwischen Befestigungszapfen 53 und Zapfenaufnahme 57 eine Standartverbindung ausgebildet wird.

Die Energieversorgungsbauteile 37 umfassen einen Energiespeicher 61 mit mehreren aufladbaren Batterien 62, insbesondere zwischen drei und sieben Hochleistungs-Akku-Strings aus LiFePO₄ mit je 9kWh und modularer Speicherkapazität von 27kWh bis 63kWh. Die Energieversorgungsbauteile 37 umfassen ferner einen elektrischen Generator 63 zum Laden der Batterien 62, insbesondere einen AC Asynchrongenerator mit 22kW. Der Generator 63 wird durch Hydraulikdruck aus der kinetischen Energie der Bewegung des Gelenkwagens 5 angetrieben.

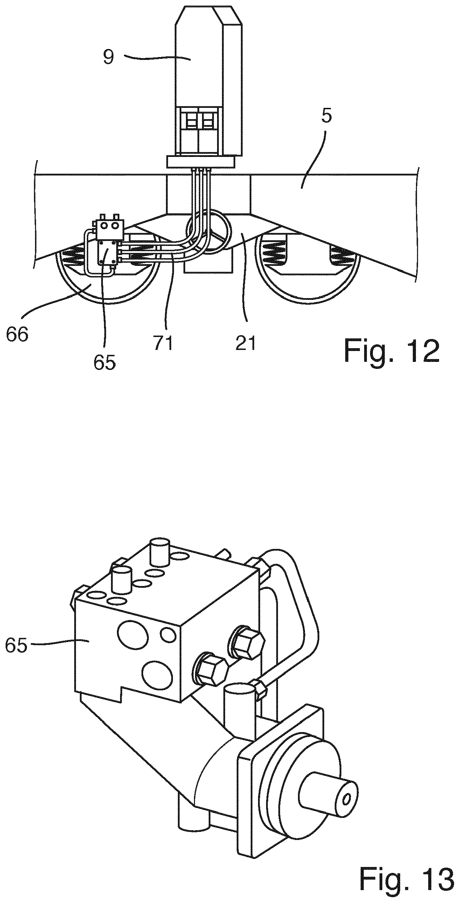

Zur Bereitstellung des Hydraulikdrucks zum Antreiben des Generators 63 weist die Gelenkwagenanordnung 1 eine Hydraulikpumpe 65 auf, insbesondere eine Axialkolben-Konstantpumpe, die an einem Radsatz 66 des gemeinsamen Drehgestells 21 montiert und von diesem angetrieben ist, wie dies in Fig. 12 gezeigt ist. In Fig. 13 ist die Hydraulikpumpe 65 isoliert dargestellt. Dabei ist die Hydraulikpumpe 65 an der Radnabe befestigt, nimmt dort die kinetische Energie aus der Drehung des Radsatzes 66 ab und wandelt sie in hydraulische Energie bzw. Hydraulikdruck um, der dann zum Generator 63 geleitet wird und diesen antreibt. Zur Verbindung der Hydraulikpumpe 65 mit dem Generator 63 sind drei Hydraulikschläuche 71 vorgesehen, welche den Hydraulikdruck von der Hydraulikpumpe 65 zu dem Generator 63 leiten.

Ferner umfassen die Energieversorgungsbauteile 37 ein Netz-Ladegerät 73, insbesondere ein HF-Netz-Ladegerät mit 10kW, zum Laden der Batterie 62 mit externem Netzstrom. Außerdem umfassen die Energieversorgungsbauteile 37 mindestens einen zugehörigen Ladeanschluss 75, insbesondere zwei CEE-Ladedosen, 5-polig, zur Verbindung des Netz-Ladegeräts 73 mit einem externen Netzanschluss.

Des Weiteren umfassen die Energieversorgungsbauteile 37 mindestens einen Lastanschluss 79, insbesondere vier CEE-Lastdosen, 4-polig und/oder 5-polig, je zwei pro Seite der Energieversorgungseinheit 9, zur Verbindung mit einem entsprechenden Anschluss an einem Container 7 zur Versorgung eines Verbrauchers, wie beispielsweise einer Kühl- bzw. Heizanlage der Container.

Neben den zuvor genannten sind noch folgende weitere Energieversorgungsbauteile 37 vorgesehen: mindestens ein Umrichter, insbesondere zwei 30 kW Mobile Drive Dualinverter, für den Generatorbetrieb und den Kühlaggregate-Betrieb; mindestens eine Reglereinheit, insbesondere ein PMU-8-Dreifels-Controller mit separatem 24V Bord-Akku und Standby Management, für das Systemmanagement und Monitoring; mindestens ein Bedien- und Überwachungsmodul zum Starten der Energieversorgungseinheit 9 und Überwachen des Betriebszustands.

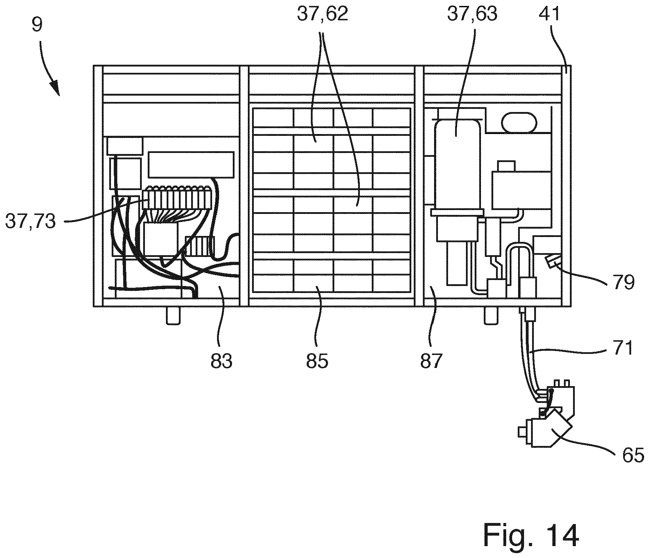

In Fig. 14 ist die Anordnung der Energieversorgungsbauteile 37 im Inneren der Energieversorgungseinheit 9 dargestellt. Die Energieversorgungsbauteile sind dabei in drei separaten Kompartments 83, 85, 87 angeordnet. In einem ersten Kompartment 83 auf der linken Seite sind Elektronik und Steuerung angeordnet, insbesondere Umrichter, Reglereinheit, Bedien- und Überwachungsmodul sowie Netz-Ladegerät 73. In einem zweiten Kompartment 85 in der Mitte sind die Batterien 62 untergebracht, insbesondere die Hochleistungs-Akku-Strings, die in mehreren Schubfächern rasterförmig unter- und nebeneinander und separat entnehmbar angeordnet sind. In einem dritten Kompartment 87 auf der rechten Seite sind Generator 63 und Hydraulikschläuche 71 angeordnet. Ebenfalls in Fig. 14 dargestellt ist die Hydraulikpumpe 65, die über die Hydraulikschläuche 71 mit dem Generator verbunden ist. Außerdem ist auf der rechten Seite des dritten Kompartments 87 ein Lastanschluss 79 zu erkennen.

Mit der oben beschriebenen Gelenkwagenanordnung 1 kann eine ununterbrochene Energieversorgung von geladenen Containern 7 auch im Stillstand und Rangierbetrieb einfach gewährleistet werden. Ferner wird der freie spaltförmige Raum 81 zwischen den Containern 7 benachbarter Wagenteile 11, 13 eines Gelenkwagens 5 für die Unterbringung der Energieversorgungseinheit 9 genutzt. Dieser Raum 81 ist ausreichend groß, um eine Energieversorgungseinheit 9 unterzubringen, welche die Kühl- oder Heizanlage eines Containers 7 für Temperatur-kontrollierte Güter versorgen kann. Gleichzeitig wird auf diese Weise kein Platz unterhalb der Containerstellplätze 29, 33 oder an anderen die Containerstellplätze 29, 33 einschränkenden Orten der Wagenteile 11, 13 von der Energieversorgungseinheit 9 eingenommen, so dass der der für die Container 7 verfügbare Raum maximiert wird.

## Patentansprüche

1. Gelenkwagenanordnung (1) für einen Eisenbahngüterzug umfassend
einen Gelenkwagen (5) zum Transport von Containern (7) mit einem ersten Wagenteil (11) und einem zweiten Wagenteil (13), wobei der erste und der zweite Wagenteil (11, 13) über eine Gelenkkupplung (15) gelenkig um eine vertikale Gelenkachse (17) miteinander gekoppelt sind, wobei der erste Wagenteil (11) an seiner Oberseite einen ersten Containerstellplatz (29) für einen oder mehrere Container (7) aufweist und wobei der zweite Wagenteil (13) an seiner Oberseite einen zweiten Containerstellplatz (33) für einen oder mehrere Container (7) aufweist,
eine Energieversorgungseinheit (9) zur Energieversorgung von auf dem Gelenkwagen (5) geladenen Containern (7),
**dadurch gekennzeichnet, dass**
die Energieversorgungseinheit (9) im Bereich der Gelenkkupplung (15) des ersten und des zweiten Wagenteils (11, 13) zwischen dem ersten und dem zweiten Containerstellplatz (29, 33) angeordnet ist.

2. Gelenkwagenanordnung (1) nach Anspruch 1, wobei die Energieversorgungseinheit (9) eine Tragstruktur (35) und mehrere an der Tragstruktur (35) befestigte Energieversorgungsbauteile (37) umfasst.

3. Gelenkwagenanordnung (1) nach Anspruch 2, wobei die Tragstruktur (35) über eine Adaptervorrichtung (45) an dem Gelenkwagen (5) befestigt ist.

4. Gelenkwagenanordnung (1) nach Anspruch 3, wobei die Adaptervorrichtung (45) mindestens eine Adapterplatte (47), vorzugsweise zwei Adapterplatten (47), umfasst, die am Ende (19) des ersten Wagenteils (11) befestigt ist bzw. sind und zum zweiten Wagenteil (13) hin ragt bzw. ragen.

5. Gelenkwagenanordnung (1) nach Anspruch 3 oder 4, wobei die Adaptervorrichtung (45) Befestigungszapfen (53) aufweist und wobei die Tragstruktur (35) entsprechende Zapfenaufnahmen (57) zum Eingriff mit den Befestigungszapfen (53) aufweist.

6. Gelenkwagenanordnung (1) nach Anspruch 5, wobei die Befestigungszapfen (53) Containerzapfen nach Norm UIC 571-4 sind.

7. Gelenkwagenanordnung (1) nach einem der Ansprüche 2 bis 6, wobei die Energieversorgungsbauteile (37) mindestens einen Energiespeicher (61) umfassen.

8. Gelenkwagenanordnung (1) nach Anspruch 7, wobei der Energiespeicher (61) mindestens eine aufladbare Batterie (62) umfasst.

9. Gelenkwagenanordnung (1) nach Anspruch 8, wobei die Energieversorgungsbauteile (37) mindestens einen elektrischen Generator (63) zum Laden der Batterie (62) umfassen.

10. Gelenkwagenanordnung (1) nach Anspruch 9, wobei der Generator (63) mit Hydraulikdruck betrieben wird.

11. Gelenkwagenanordnung (1) nach Anspruch 10, wobei die Gelenkwagenanordnung (1) zur Bereitstellung des Hydraulikdrucks eine Hydraulikpumpe (65) aufweist, die an einem Radsatz (66) montiert und von diesem angetrieben ist.

12. Gelenkwagenanordnung (1) nach einem der Ansprüche 8 bis 11, wobei die Energieversorgungsbauteile (37) mindestens ein Netz-Ladegerät (73) zum Laden der Batterie (7) mit externem Netzstrom umfassen sowie mindestens einen zugehörigen Ladeanschluss (75) zur Verbindung mit einem externen Netzanschluss umfassen.

13. Gelenkwagenanordnung (1) nach einem der Ansprüche 8 bis 12, wobei die Energieversorgungsbauteile (37) mindestens einen Lastanschluss (79) zur Verbindung mit einem entsprechenden Anschluss an einem Container (7) umfassen.

14. Gelenkwagen (5) für eine Gelenkwagenanordnung (1) nach einem der Ansprüche 1, 2 und 4 bis 13 umfassend
einen ersten Wagenteil (11) und einen zweiten Wagenteil (13),
wobei der erste und der zweite Wagenteil (11, 13) über eine Gelenkkupplung (15) gelenkig um eine vertikale Gelenkachse (17) miteinander gekoppelt sind,
wobei der erste Wagenteil (11) an seiner Oberseite einen ersten Containerstellplatz (29) für einen oder mehrere Container (7) aufweist,
wobei der zweite Wagenteil (13) an seiner Oberseite einen zweiten Containerstellplatz (33) für einen oder mehrere Container (7) aufweist,
wobei der Gelenkwagen (5) eine Adaptervorrichtung (45) zur Befestigung einer Energieversorgungseinheit (9) zur autonomen Energieversorgung von auf dem Gelenkwagen (5) geladenen Containern (7) aufweist, und
wobei die Adaptervorrichtung (45) im Bereich der Gelenkkupplung (15) zwischen dem ersten und dem zweiten Containerstellplatz (29, 33) angeordnet ist.

## Claims

1. Articulated wagon arrangement (1) for a railway goods train, comprising
an articulated wagon (5) for transporting containers (7), having a first wagon part (11) and a second wagon part (13), wherein the first and the second wagon part (11, 13) by way of an articulated coupling (15) are coupled to one another so as to be articulated about a vertical articulation axis (17), wherein the first wagon part (11) on the upper side thereof has a first container storage space (29) for one or a plurality of containers (7), and wherein the second wagon part (13) on the upper side thereof has a second container storage space (33) for one or a plurality of containers (7),
a power supply unit (9) for the supply of power to containers (7) loaded on the articulated wagon (5),
**characterized in that**
the power supply unit (9) is disposed in the region of the articulated coupling (15) of the first and of the second wagon part (11, 13), between the first and the second container storage space (29, 33).

2. Articulated wagon arrangement (1) according to Claim 1, wherein the power supply unit (9) has a support structure (35) and a plurality of power supply components (37) fastened to the support structure (35) .

3. Articulated wagon arrangement (1) according to Claim 2, wherein the support structure (35) is fastened to the articulated wagon (5) by way of an adapter device (45).

4. Articulated wagon arrangement (1) according to Claim 3, wherein the adapter device (45) comprises at least one adapter plate (47), preferably two adapter plates (47), which is/are fastened to the end (19) of the first wagon part (11) and protrudes/protrude towards the second wagon part (13).

5. Articulated wagon arrangement (1) according to Claim 3 or 4, wherein the adapter device (45) has fastening pins (53), and wherein the support structure (35) has corresponding pin receptacles (57) for engaging with the fastening pins (53).

6. Articulated wagon arrangement (1) according to Claim 5, wherein the fastening pins (53) are container pins according to standard UIC 571-4.

7. Articulated wagon arrangement (1) according to one of Claims 2 to 6, wherein the power supply components (37) comprise at least one energy store (61) .

8. Articulated wagon arrangement (1) according to Claim 7, wherein the energy store (61) comprises at least one rechargeable battery (62).

9. Articulated wagon arrangement (1) according to Claim 8, wherein the power supply components (37) comprise at least one electric generator (63) for charging the battery (62).

10. Articulated wagon arrangement (1) according to Claim 9, wherein the generator (63) is operated by hydraulic pressure.

11. Articulated wagon arrangement (1) according to Claim 10, wherein the articulated wagon arrangement (1) for providing the hydraulic pressure has a hydraulic pump (65) which is assembled on a wheelset (66) and driven by the latter.

12. Articulated wagon arrangement (1) according to one of Claims 8 to 11, wherein the power supply components (37) comprise at least one mains charging apparatus (73) for charging the battery (7) with an external mains current, and at least one associated charging connector (75) for connecting to an external mains connection.

13. Articulated wagon arrangement (1) according to one of Claims 8 to 12, wherein the power supply components (37) comprise at least one load connector (79) for connecting to a corresponding connector on a container (7).

14. Articulated wagon (5) for an articulated wagon arrangement (1) according to one of Claims 1, 2 and 4 to 13, comprising
a first wagon part (11) and a second wagon part (13) ,
wherein the first and the second wagon part (11, 13) by way of an articulated coupling (15) are coupled to one another so as to be articulated about a vertical articulation axis (17),
wherein the first wagon part (11) on the upper side thereof has a first container storage space (29) for one or a plurality of containers (7),
wherein the second wagon part (13) on the upper side thereof has a second container storage space (33) for one or a plurality of containers (7),
wherein the articulated wagon (5) has an adapter device (45) for fastening a power supply unit (9) for the autonomous supply of power to containers (7) loaded on the articulated wagon (5), and
wherein the adapter device (45) is disposed in the region of the articulated coupling (15), between the first and the second container storage space (29, 33) .

## Revendications

1. Agencement de wagon articulé (1) pour un train de marchandises ferroviaire comprenant
un wagon articulé (5) pour le transport de conteneurs (7) avec une première partie de wagon (11) et une deuxième partie de wagon (13), la première et la deuxième partie de wagon (11, 13) étant accouplées l'une à l'autre de manière articulée autour d'un axe d'articulation vertical (17) via un accouplement articulé (15), la première partie de wagon (11) présentant sur son côté supérieur un premier emplacement de conteneur (29) pour un ou plusieurs conteneurs (7) et la deuxième partie de wagon (13) présentant sur son côté supérieur un deuxième emplacement de conteneur (33) pour un ou plusieurs conteneurs (7),
une unité d'alimentation en énergie (9) pour l'alimentation en énergie de conteneurs (7) chargés sur le wagon articulé (5),
**caractérisé en ce que**
l'unité d'alimentation en énergie (9) est agencée dans la zone de l'accouplement articulé (15) de la première et de la deuxième partie de wagon (11, 13) entre le premier et le deuxième emplacement de conteneur (29, 33) .

2. Agencement de wagon articulé (1) selon la revendication 1, dans lequel l'unité d'alimentation en énergie (9) comprend une structure porteuse (35) et plusieurs composants d'alimentation en énergie (37) fixés à la structure porteuse (35).

3. Agencement de wagon articulé (1) selon la revendication 2, dans lequel la structure porteuse (35) est fixée au wagon articulé (5) via un dispositif d'adaptation (45).

4. Agencement de wagon articulé (1) selon la revendication 3, dans lequel le dispositif d'adaptation (45) comprend au moins une plaque d'adaptation (47), de préférence deux plaques d'adaptation (47), qui est ou sont fixées à l'extrémité (19) de la première partie de wagon (11) et qui fait ou font saillie vers la deuxième partie de wagon (13).

5. Agencement de wagon articulé (1) selon la revendication 3 ou 4, dans lequel le dispositif d'adaptation (45) présente des tenons de fixation (53) et dans lequel la structure porteuse (35) présente des logements de tenon correspondants (57) destinés à venir en prise avec les tenons de fixation (53).

6. Agencement de wagon articulé (1) selon la revendication 5, dans lequel les tenons de fixation (53) sont des tenons de conteneur selon la norme UIC 571-4.

7. Agencement de wagon articulé (1) selon l'une quelconque des revendications 2 à 6, dans lequel les composants d'alimentation en énergie (37) comprennent au moins un accumulateur d'énergie (61).

8. Agencement de wagon articulé (1) selon la revendication 7, dans lequel l'accumulateur d'énergie (61) comprend au moins une batterie rechargeable (62).

9. Agencement de wagon articulé (1) selon la revendication 8, dans lequel les composants d'alimentation en énergie (37) comprennent au moins un générateur électrique (63) pour charger la batterie (62).

10. Agencement de wagon articulé (a) selon la revendication 9, dans lequel le générateur (63) fonctionne avec une pression hydraulique.

11. Agencement de wagon articulé (1) selon la revendication 1o, dans lequel l'agencement de wagon articulé (1) présente, pour fournir la pression hydraulique, une pompe hydraulique (65) qui est montée sur une paire de roues (66) et entraînée par celle-ci.

12. Agencement de wagon articulé (1) selon l'une quelconque des revendications 8 à 11, dans lequel les composants d'alimentation en énergie (37) comprennent au moins un chargeur secteur (73) pour charger la batterie (7) avec un courant secteur externe et comprennent au moins une borne de charge associée (75) pour la connexion à une borne secteur externe.

13. Agencement de wagon articulé (1) selon l'une quelconque des revendications 8 à 12, dans lequel les composants d'alimentation en énergie (37) comprennent au moins une borne de charge (79) destinée à être connectée à une borne correspondante sur un conteneur (7).

14. Wagon articulé (5) pour un agencement de wagon articulé (1) selon l'une quelconque des revendications 1, 2 et 4 à 13, comprenant
une première partie de wagon (11) et une deuxième partie de wagon (13),
la première et la deuxième partie de wagon (11, 13) (11, 13) étant accouplées l'une à l'autre de manière articulée autour d'un axe d'articulation vertical (17) via un accouplement articulé (15),
la première partie de wagon (11) présentant sur son côté supérieur un premier emplacement de conteneur (29) pour un ou plusieurs conteneurs (7),
la deuxième partie de wagon (13) présentant sur son côté supérieur un deuxième emplacement de conteneur (33) pour un ou plusieurs conteneurs (7),
le wagon articulé (5) présentant un dispositif d'adaptation (45) pour la fixation d'une unité d'alimentation en énergie (9) pour l'alimentation en énergie autonome de conteneurs (7) chargés sur le wagon articulé (5), et
le dispositif d'adaptation (45) étant agencé dans la zone de l'accouplement articulé (15) entre le premier et le deuxième emplacement de conteneur (29, 33).
